# EUROPEAN PATENT APPLICATION

(11) **EP 1 719 960 A1**
(43) Date of publication of application: **08.11.2006**
(21) Application number: 04727209.1
(22) Date of filing: 14.04.2004
(51) Int. Cl.: F25B 1/00

(54) **VARIABLE CAPACITY MODULAR REFRIGERATING INSTALLATION BY FREQUENCY CONVERSION**

(30) Priority: 25.02.2004 CN 200410006016
(71) Applicant: Guangzhou Panyu Super Link Co. Ltd, Guangzhou Guangdong 510060 (CN)
(72) Inventor: ZHAO, Ningfan, Room 1905-1909, Guangdong 510060 (CN)
(74) Representative: Grünecker, Kinkeldey, Stockmair & Schwanhäusser Anwaltssozietät
(86) International application number: PCT/CN2004/000346
(87) International publication number: WO 2005/083334

(57) **Abstract**

A variable capacity modular combined refrigerating installation, which has several modular refrigerating units. Each modular unit has a refrigerating circle, which includes a refrigerating compressor set (1), an evaporator (4) and a condenser (10). A flow control valve (6) is mounted at the refrigerating medium inlet/outlet port of the evaporator (4); and/or a flow control valve (11) is mounted at the inlet/outlet port of the condenser (10). The refrigerating compressor set (1) comprises an adjustable frequency motor (1A) and a compressor (1B) with magnetic suspend bearings. Each modular unit is also provided with an inlet pressure sensor (26) and/or discharge pressure sensor (27). The installation provided with a refrigerating water temperature sensor (19), a sensor (20) for pressure difference between supply and return at the installation side and a sensor (21) for pressure difference between supply and return at the load side; and a sensor (22) for pressure difference between supply and return at the installation side. The present invention can decrease the power consumption of the air conditioning system and provide a convenient and improved control.

## Description

### Technical field

The present invention relates to a refrigerating installation, especially to a variable capacity modular combined refrigerating installation by frequency conversion.

### Background Art

The modular combined refrigerating installations have been widely used for design and application of the refrigerating water installation of air conditioning system. According to the requirement of installation load of the building, the modular combined refrigerating water installation is composed of multiple standard refrigerating modular units, and the installation capacity of the system may be increase or decrease at any time, so it can be used flexibly. Also, because each refrigerating modular unit is a complete refrigerating system, the number of the running modular units may be increased or decreased under the control of the master controller according to the need of the system load. So not only the outlet of the installation highly correspond with the need of the system, but also the installation has peak running efficiency in the low load running state. Thus the running efficiency will not be decreased due to the decrease of the load, thereby decreasing the running cost of the installation. Furthermore, the modular combined refrigerating water installation has highly reliability. Though some modular units may have failure, other part of the installation can keep on running, and the wrong part of the installation can be examined and repaired when the installation is running. Thus, the modular combined refrigerating installation has many advantages over other systems. However, it is found through several years of uses that there is a possibility to decrease the power consumption and improve the control level besides the advantages of the modular refrigerating installation.

### Summary of the invention

The purpose of the invention is to provide a variable capacity modular combined refrigerating installation by frequency conversion. It is improved on the basis of the prior modular refrigerating installation, to decrease power consumption and improve control level.

The purpose of the invention is carried out according to the following technical solution.

The variable capacity modular combined refrigerating installation of the invention is composed of multiple refrigerating modular units. Each modular unit has one or more refrigerating cycles, which include a refrigerating compressor set, an evaporator and a condenser. Wherein:
A flow control valve is mounted at one of the refrigerating medium inlet/outlet ports of the evaporator, and at one of the inlet/outlet ports of the condenser, at least; that is to say, a flow control valve of the refrigerating medium is mounted at the inlet/outlet port of the evaporator, a flow control valve of the cooling medium is mounted at the inlet/outlet port of the condenser.

The refrigerating compressor set as used includes an adjustable frequency motor and a compressor with magnetic suspension bearings.

A suction pressure sensor is mounted at the inlet port of the compressor to transfer the pressure information for controlling the work capacity of the compressor set; and/or a discharge pressure sensor is mounted at the outlet port of the compressor to transfer the pressure information for controlling the opening ratio of the flow control valve of the cooling medium.

There is a refrigerating water temperature sensor for collecting and transferring the temperature parameters of refrigerating water in the installation to control the opening ratio of the flow control valve of the refrigerating medium.

There are a sensor for pressure difference between supply and return at the installation side and a sensor for pressure difference between supply and return at the load side in the refrigerating medium system for collecting and transferring the parameters of pressure difference between supply and return to calculate and control the working frequency of the output pump.

There is a sensor for pressure difference between supply and return at the installation side and a sensor for pressure difference between supply and return at the installation side in the cooling medium system for collecting and transferring the parameters of the pressure difference between supply and return, to calculate and control the working frequency of the output pump.

A magnetic bearing sensor is mounted at each magnetic bearing of the compressor respectively.

Said evaporator is a plate heat exchanger of full liquid evaporation type, which is composed of an inner core and an outer shell, said core is formed by welding a certain number of metal plates of certain geometric shape stacked according to a certain rule; said outer shell is a barrel shaped container with a circle or square section. There are two or more kinds of medium flowing channels in said evaporator, which are isolated from each other.

There is an economizer in each modular unit. The liquid cryogen exited from the condenser is divided into two parts, one part super cools the other part after being throttled and then evaporates. Since the cryogen after the evaporation has a pressure higher than the outlet pressure of the cryogen of evaporator, it enters into the intermediate pressure suction port of the condenser 1B. This economizer cycle can increase the refrigerating capacity and the refrigerating efficiency of a refrigerating unit.

A throttling expansion device of liquid level control is mounted between the condenser and the plate heat exchanger of full liquid evaporation type.

A gas-liquid separator is mounted between the suction port of the compressor and the plate heat exchanger of full liquid evaporation type.

The general circuit of the modular combined refrigerating installation is controlled by a master controller, and the circuit of each modular unit is controlled by a microprocessor controller.

The present invention is based on the application of a new type of compressor set and heat exchanger. The new type of refrigerating compressor set can control the opening ratio of the refrigerating/cooling medium valve devices according to the working parameters provided by the sensors, or change the working frequency of the input power supply according to the working parameters provided by the sensors, so as to regulate the operating speed of the motor to adjust the output refrigerating capacity of the refrigerating installation. This compressor set is different from the traditional compressor set in that it adopts the magnetic suspension bearings, so it does not need the traditional lubricating oil and the corresponding circulating system and cooling system, and it does not pollute the heat exchanger and affect the efficiency of the heat exchange due to the existence of the lubricating oil. The oil-free compressor facilitates the use of full liquid evaporator. Furthermore, the compressor set integrates a control means of digital circuit, and can monitor and adjust the operating condition of the compressor in real time and allow each refrigerating modular unit to work in balance without depending on the outside control system. The heat exchanger used in the invention is a plate heat exchanger having the full liquid evaporation function. In all kinds of evaporators, the full liquid evaporation is a heat exchange process of high efficiency, in which the refrigerating medium channel is immersed in the liquid cryogen, so that the heat exchange can be carried out under a very little temperature difference. The new type of heat exchanger of the invention combines the operating principle of full liquid evaporator and the compact structure of plate heat exchanger, and incorporates with the economizer, thereby obtaining a heat exchange device with higher efficiency.

In general, the present invention apply the abovementioned new techniques and control the circulation flow of the refrigerating and cooling medium by combining the viable frequency control technique, therefore, it not only can change the refrigerating output of the refrigerating modular unit by controlling the working frequency of the input power, but also can make the working flow of the refrigerating and cooling medium to be consistent with the refrigerating capacity, so that reduce the running power of the water pump or the blower fan when the compressor set or the refrigerating installation is running with low load, and finally decrease the power consumption of the air conditioning system and improve the control level to make the control more convenient.

### Description of the drawings

Figure 1 shows the operating principle of the modular unit of the invention.
Figure 2 is an installation diagram of the modular unit of the invention.
Figure 3 is a block diagram showing the control principle of the modular unit of the invention.
Figure 4 is a block diagram showing the control principle of the refrigerating installation of the invention.
Figure 5 is an installation scheme of the sensing system of the refrigerating installation.

### Description of the symbols in the drawings:

- 1: compressor set
- 1A: motor
- 1B: compressor
- 2: gas-liquid separator
- 3: electric control box
- 4: evaporator (plate heat exchanger of full liquid evaporation type)
- 41: core of the evaporator
- 42: shell of the evaporator
- 5: discharge collecting tube of the refrigerating medium
- 6: flow control valve of the refrigerating medium
- 7: inlet collecting tube of the refrigerating medium
- 8: throttling expansion device
- 9: dry filter
- 10: condenser
- 11: flow control valve of the cooling medium
- 12: discharge collecting tube of the cooling medium
- 13: inlet collecting tube of the cooling medium
- 14: economizer
- 14A: heat exchange tube
- 15: expansion valve
- 18: microprocessor controller of the compressor
- 19: temperature sensor of the refrigerating medium
- 20: sensor for pressure difference between supply and return of the refrigerating medium at the installation side
- 21: sensor for pressure difference between supply and return of the refrigerating medium at the load side
- 22: sensor for pressure difference between supply and return of the cooling medium at the installation side
- 23: variable frequency regulator of the delivery pump for refrigerating medium (transducer)
- 24: variable frequency regulator of the delivery pump for cooling medium (transducer)
- 25: master controller
- 26: suction pressure sensor
- 27: discharge pressure sensor
- 28: magnetic bearing sensor

### Detailed Description of the Embodiments of the Invention

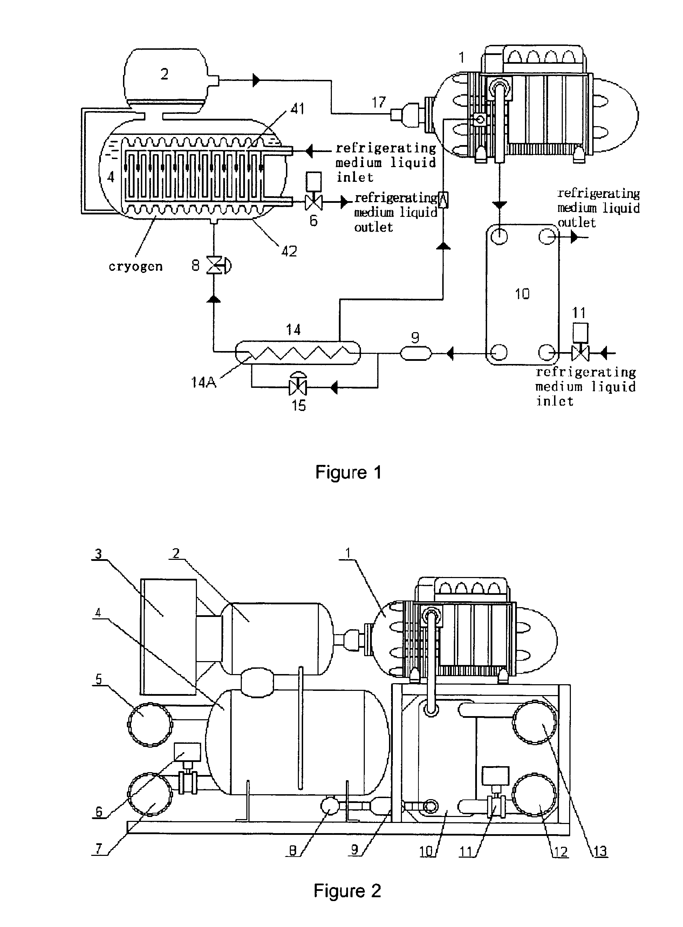

The present invention is a modular combined refrigerating installation (refer to as combined refrigerating installation hereafter) composed of multiple refrigerating modular units (refer to as modular unit hereafter). For example, figures 1 and 2 are the operating principle of a refrigerating modular unit. Each modular unit has a refrigerating cycle, which includes a refrigerating compressor set 1, an evaporator 4 and a condenser 10; Each modular unit has an inlet collecting tube 7 and a discharge collecting tube 5 for the flow of refrigerating medium, and the collecting tubes connect with the inlet port and outlet port of medium liquid of the evaporator 4 to constitute a cycle channel of the refrigerating medium liquid. When a plurity of modular units are combined, these collecting tubes link orderly to form a common channel of the refrigerating medium liquid in the combined refrigerating installation, and the evaporator 4 of each modular unit is connected parallelly to the common channel.

A flow control valve 6 of the refrigerating medium which can be regulated by proportional integral (e.g. the electric butterfly valve made by Danfoss company) is mounted between the inlet collecting tube 7 of the refrigerating medium and the port of the evaporator 4. When the output refrigerating parameters of compressor 1 change, the flow control valve 6 regulates the opening ratio of the valve simultaneously to adjust the flow of the refrigerating medium through the evaporator and make the working flow consistent with the change of output refrigerating capacity of the compressor.

Each modular unit has an inlet collecting tube 13 and a discharge collecting tube 12 for the cooling medium liquid, and the collecting tubes connect with the inlet/outlet ports of cooling medium liquid of the condenser 10 to constitute a common channel of the cooling medium liquid; When a plurality of refrigerating modular units are combined, the collecting tubes link orderly to form a common channel of the cooling medium liquid in the refrigerating installation, and the condenser 10 of each modular unit is connected parallelly to the common channel; A cooling medium flow control valve 11 which can be regulated by proportional integral is mounted between the collecting tube of the cooling medium and the port of the condenser 10; The flow control valve 11 cooperate with the compressor 1B in a modular unit, and when the output refrigerating capacity of the compressor changes, the flow control valve 11 regulates the opening ratio of the valve simultaneously to adjust the flow of cooling medium of the condenser 10 and make the working flow consistent with the change of output refrigerating capacity of the compressor.

The evaporator 4 as shown is a plate heat exchanger of full liquid evaporation type, which is composed of an inner core 41 and an outer shell 42, said core 41 is formed by welding a certain number of metal plates with certain geometric shape according to a certain rule; said outer shell 42 is a barrel shaped container with a circle or square section; two or more kinds of medium flowing channels are provided in said evaporator 4, they are isolated from each other. The channel between the core 41 and shell 42 is the channel for cryogen, and the cryogen enters into the evaporator 4 after throttling expansion to submerge the core 41, so that the refrigerating medium flowing inside the core 41 is cooled, while the liquid cryogen absorb the heat of the refrigerating medium to be evaporated into gas.

An economizer 14 is provided in each modular unit. The liquid cryogen from the condenser 10 is divided into two parts, one part pass through the dry filter 9 and is throttled by the expansion valve 15, and then super-cool the other part (pass through the heat-exchanging tube 14A) and evaporates. The cryogen after evaporation enters into the suction port of intermediate pressure of the condenser 1B due to the pressure higher than the outlet pressure of the cryogen in the evaporator; This economizer cycle can increase the refrigerating capacity and the refrigerating efficiency of unit.

A liquid level control throttling expansion device 8 (e.g. the thermoelectric type expansion valve made by Sporlan company) is mounted between the condenser 10 and the full liquid evaporator 4 to control the height of the liquid level of cryogen. When the refrigerating load decrease and the liquid level of cryogen increase in the evaporator 4 since the cryogen can not be fully evaporated, the opening ratio of the throttling expansion device 8 is decreased to reduce the supply of the cryogen. Whereas, the supply of the cryogen is increased. The throttling expansion device may be a floating ball type expansion valve, a thermoelectric type expansion valve or an electronic expansion valve, and the like.

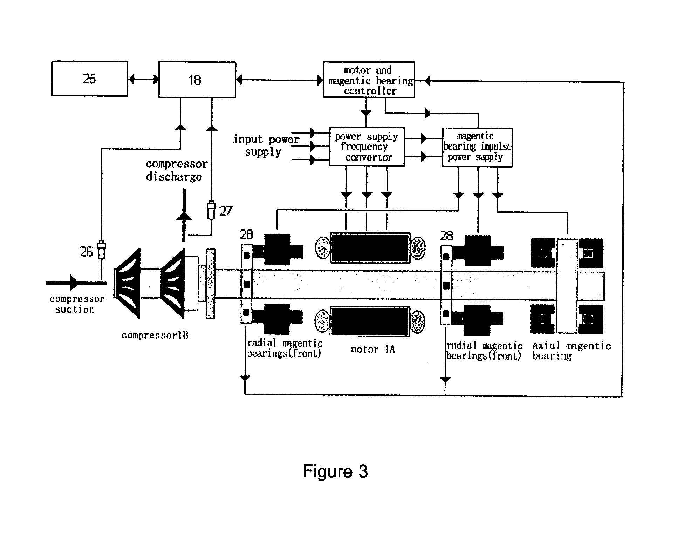

A gas-liquid separator 2 is mounted between the suction port of the compressor 17 and the evaporator 4 to separate the liquid drops which are not fully evaporated and carried by the cryogen steam from the evaporator 4, wherein the gaseous cryogen is absorbed by the compressor 1B (see figure 3), while liquid cryogen returns to the evaporator 4.

The working process of the system is as follows: the high pressure gaseous cryogen discharged from the compressor 1 is condensed to liquid cryogen in the condenser 10. After dried and filtrated by the dry filter 9, the cryogen is divided into main flow and branch flow, wherein the branch flow of less flow is throttled with the expansion valve 15 (e.g. the thermal expansion valve made by Danfoss company), and enters the economizer 14. The cryogen in the branch flow cools the cryogen in the main flow, i.e. in the heat exchanging tube 14A, to further decrease the degree of super-cooling of the cryogen in the heat exchanging tube 14A, so that increase the refrigerating capacity of unit flow rate. The branch flow cryogen discharged from the economizer 14 returns to the intermediate pressure suction port of the compressor 1 and is compressed by the compressor 1. The main flow cryogen is throttled by the expansion valve 8 and enters into the evaporator 4, in which it absorbs the heat of the refrigerated water to be evaporated into gas. The gaseous cryogen returns to the suction port 17 of the condenser through the gas-liquid separator 2, and then is compressed by the compressor. These completed a cycle process. When a plurality of refrigerating modular units are combined, the inlet/discharge collecting tubes for the refrigerating medium and the cooling medium join orderly to form the consecutive channels respectively, and these channels serve as the inlet or outlet common channel for refrigerating/cooling medium respectively in each refrigerating modular unit. The air cooling refrigerating modular unit has the same operation principle except that the condenser 10 is a finned coil condenser (not shown), and does not need the collecting tubes 12 and 13.

As shown in figure 3, the used refrigerating compressor unit 1 (e.g. the TT300 refrigerating compressor made by TURBOCOR company) includes an adjustable frequency motor 1A and a compressor 1B with magnetic suspension bearings; the compressor 1B may change the working frequency of the power supply or other working parameters to adjust the operating speed, thereby regulating the refrigerating capacity, and the compressor 1B is a oil-free type refrigerating compressor which does not need any lubricating oil.

A discharge pressure sensor 27 (e.g. the pressure sensor made by Danfoss company) is mounted at the discharge port of the compressor 1B to transfer the pressure information for controlling the opening ratio of the flow control valve 11 of refrigerating medium. When the output load of the compressor 1B decreases, and/or the decrease of the temperature of cooling medium results in the decrease of the discharge pressure of the compressor, the controller 18 decreases the opening ratio of the flow control valve 11 of cooling medium to reduce the supply of cooling medium; and when the output load of the compressor 1B increases, and/or the increase of the temperature of cooling medium results in the increase of the discharge pressure, the controller 18 increases the opening ratio of the flow control valve 11 of cooling medium to increase the supply of cooling medium, thereby maintaining a stable discharge pressure.

Each magnetic bearing sensors 28 (e.g. the TT300 magnetic bearing sensor provided by TURBOCCOR company) is mounted at the front and back radial magnetic bearings of the compressor 1B respectively. According to the bearing magnetic strength parameters collected by the magnetic bearing sensor 28, the microprocessor controller 18 (e.g. the TT300 compressor controller made by TURBOCOR company) instruct the motor and magnetic bearing controller to increase the voltage of the magnetic bearing work power supply when the magnetic strength decreases; and decrease the voltage of the magnetic bearing work power supply when the magnetic strength is too high, thereby maintaining the normal working condition of the magnetic bearings.

A suction pressure sensor 26 (e.g. the pressure sensor made by Danfoss company) is mounted at the suction port 17 of the compressor to transfer the pressure information for controlling the opening ratio of the flow control valve 6 of refrigerating medium; The compressor set 1 is integrated with a microprocessor controller 18, and when the load decrease, the opening ratio of the flow control valve 6 of refrigerating medium decrease and the flow rate decrease so that the suction pressure of the compressor 1B decrease, the information of the decrease of the pressure is transferred to the controller 18 by the sensor 26, and the controller 18 instructs the motor and magnetic bearing controller to decrease the frequency of input power supply of motor 1A, thereby decreasing the operating speed of the motor and reducing the refrigerating capacity of the compressor; Or if the load increases, the reverse process should be followed.

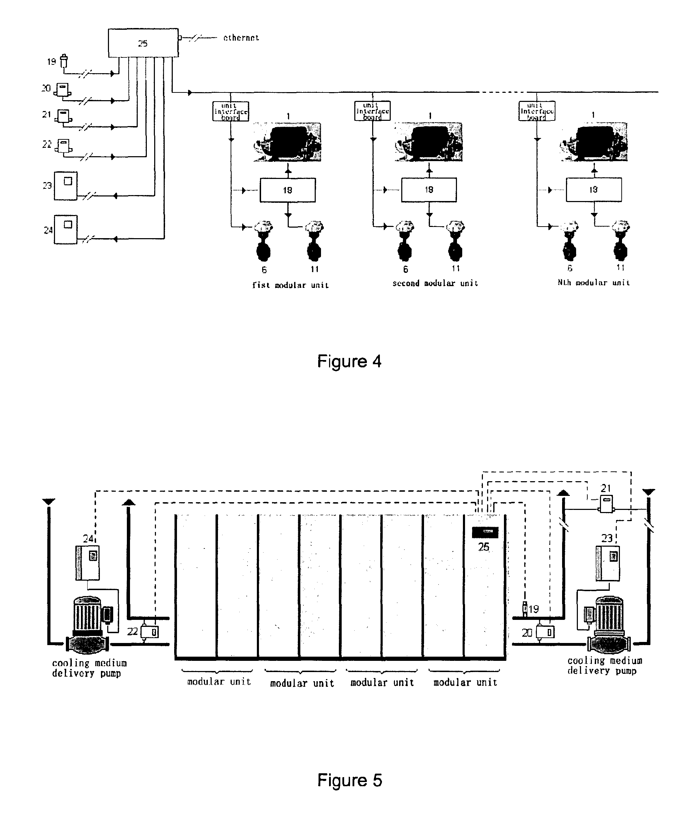

As shown in figures 4 and 5, a refrigerating water temperature sensor 19 (e.g. the temperature sensor made by Johnson company) is used to collect and transfer the refrigerating water temperature parameters of the installation for controlling the opening ratio of flow control valve 6 of the refrigerating medium in a modular unit. In the combined refrigerating installation, a master controller 25 (e.g. MV6 controller made by Multistack company) for the combined refrigerating installation is used to control the operation of each modular unit by collecting the refrigerating water temperature parameters of installation with the refrigerating water temperature sensor 19 and calculating the load required by the refrigerating system. When the refrigerating water temperature increases as the load of system increases, so the opening ratio of the flow control valve 6 of refrigerating medium in the modular unit which is lastly started is increased or the flow control valve of refrigerating medium of the next modular unit is opened, and the microprocessor controller 18 of compressor is instructed to start the corresponding compressor. If the temperature of the refrigerating medium decreases as the load required by the system decreases, the inverse process should be followed.

There are also a sensor 20 for pressure difference between supply and return at the unit side of the refrigerating medium system and a sensor 21 for pressure difference between supply and return at the load side (e.g. the pressure difference sensor made by HUBA company) to collect and transfer the parameters of pressure difference between supply and return for calculating and controlling the working frequency of the delivery pump. The master controller 25 of the combined refrigerating installation collects the parameters of the sensor 20 for pressure difference between supply and return at the installation side (e.g. the pressure difference sensor made by HUBA company) and of the sensor 21 for pressure difference between supply and return at the load side (e.g. the pressure difference sensor made by HUBA company) of the refrigerating medium system for calculating and controlling the working frequency of the delivery pump. When the two pressure difference values decrease as the system load increase, the master controller increases the working frequency of transducers 23 for one or more delivery pumps of the refrigerating medium (e.g. the transducer made by Danfoss company) to increase the circulation flow of the refrigerating medium so that be consistent with the required load of the system; If the two pressure difference values increase as the system load decreases, the master controller decrease the working frequency of transducers 23 for one or more delivery pumps of the refrigerating medium to decrease the circulation flow of the refrigerating medium so that be consistent with the required load of the system.

There is a sensor 22 for pressure difference between supply and return at the installation side of the cooling medium system (the pressure difference sensor made by HUBA company) to calculate and control the working frequency of the delivery pump. The master controller 25 collect the parameters of the sensor 22 for pressure difference between supply and return at the installation side of the refrigerating medium system for calculating and controlling the working frequency of the delivery pump. When the pressure difference value decreases as the system load increases, the master controller increases the working frequency of transducers 24 for one or more delivery pumps of the cooling medium (e.g. the transducer made by Danfoss company) to increase the circulation flow of the cooling medium so that be consistent with the required load of the system; If the pressure difference value increases as the system load decreases, the master controller decreases the working frequency of transducers 24 for one or more delivery pumps of the cooling medium to decrease the circulation flow of the cooling medium so that be consistent with the required load of the system.

The automatic, balanced and energy-saving operation mode may be: the master microprocessor controller 25 which is mounted in the electric control box 3 of one of the refrigerating modular units monitors the microprocessor controllers 18 on each compressor, and detects the working temperature of the refrigerating medium by the temperature sensor 19 of refrigerating medium of the refrigerating installation. When the temperature of the refrigerating medium flowed out of the installation decreases as the system load decreases, the master controller 25 firstly decrease the opening ratio of the flow control valve 6 of refrigerating medium of the modular unit of which the compressor has the most long cumulating running time among all the running compressors, to decrease the flow of refrigerating medium and decrease the suction pressure of the compressor, so that the controller 18 decrease the working frequency of the compressor set 1 to decrease the work output of the compressor set. When the compressor output load decreases, the discharge pressure of the compressor also decreases, thus the opening ratio of the flow control valve 11 of cooling medium is decreased at the same time to reduce the supply of the cooling medium. With the decrease of the load required by the system, the work output of this compressor set 1 will decrease continuously and finally it is closed completely. At this time, the operation of next compressor begin to change by the same process; And when the temperature of refrigerating medium flowed out of the installation increases as the load required by the system increases, according to an inverse process to the above method, the compressor having the least cumulating running time in all the compressors in rest state is started, and the flow control valve of the refrigerating medium in the modular unit, on which said compressor is mounted, is opened simultaneously with the opening ratio of said flow control valve increased continuously. Due to the increase of the flow of refrigerating medium, the suction pressure of the compressor increases, and the controller 18 increases the working frequency of the compressor to increase the output of the compressor to the maximum state. When the output of the compressor increases, the discharge pressure of the compressor increases, so that the opening ratio of the flow control valve 11 of cooling medium increases, and the supply of the cooling medium increases. With the increase of the load required by the system, the working output of this compressor will increase continuously until to the maximum state, and then the next compressor set is started. Thus, the installation is operated in a balanced and energy-saving mode.

## Claims

1. A variable capacity modular combined refrigerating installation, which consists of multiple refrigerating modular units, each modular unit comprising one or more refrigerating cycles which includes a refrigerating compressor set (1), an evaporator (4) and a condenser(10), **characterized in that**:
a flow control valve of refrigerating medium (6) is mounted at one of the refrigerating medium inlet/outlet ports of the evaporator (4), and a flow control valve of cooling medium (11) is mounted at one of the inlet/outlet ports of the condenser (10), at least;
the refrigerating compressor set (1) includes a frequency conversion motor (1A) and a compressor with magnetic suspension bearings (1B).

2. A modular combined refrigerating installation according to claim 1, wherein:
a suction pressure sensor (26) is mounted at the suction port (17) of the compressor set (1) to transfer the pressure information for controlling the working capacity of the compressor set (1); and/or a discharge pressure sensor (27) is mounted at the outlet port of the compressor to transfer the pressure information for controlling the opening ratio of said flow control valve (11) of cooling medium.

3. A modular combined refrigerating installation according to claim 1 or 2, wherein:
it comprises a refrigerating water temperature sensor (19) to collect and transfer the parameters of the refrigerating water temperature of the installation for controlling the opening ratio of said flow control valve (6) of refrigerating medium.

4. A modular combined refrigerating installation according to any of claims 1 to 3,
wherein:
it comprises a sensor (20) for pressure difference between supply and return at the installation side and a sensor (21) for pressure difference between supply and return at the load side in the refrigerating medium system, to collect and transfer the parameters of the pressure difference between supply and return for calculating and controlling the working frequency of the delivery pump.

5. A modular combined refrigerating installation according to any of claims 1 to 4, wherein:
it comprises a sensor (22) for pressure difference between supply and return at the installation side in the cooling medium system to calculate and control the working frequency of the delivery pump.

6. A modular combined refrigerating installation according to any of claims 1 to 5, wherein:
a magnetic bearing sensor (28) is mounted at each magnetic bearing of the compressor (1B).

7. A modular combined refrigerating installation according to any of claims 1 to 6,
wherein:
said evaporator (4) is a plate heat exchanger of full liquid evaporation type, which is composed of an inner core (41) and an outer shell (42), said core (41) is formed by welding a certain number of metal plate of certain geometric shape according to a certain rule; said outer shell (42) is a barrel shaped container with a circle or square section; and in said evaporator (4), there are two or more kinds of medium flowing channels which are isolated from each other.

8. A modular combined refrigerating installation according to any of claims 1 to 7,
wherein:
each modular unit is provided with an economizer (14), and the liquid cryogen from said condenser (10) is divided into two parts, one part after being throttled super cools the other part, while said one part absorbs heat and evaporates itself.

9. A modular combined refrigerating installation according to any of claims 1 to 8,
wherein:
a liquid level control throttling expansion device (8) is mounted between said condenser (10) and the plate heat exchanger of full liquid evaporation type (4).

10. A modular combined refrigerating installation according to any of claims 1 to 9, wherein:
a gas-liquid separator (2) is mounted between the suction port of the compressor (17) and the plate heat exchanger of full liquid evaporation type (4).

11. A modular combined refrigerating installation according to any of claims 1 to 10, wherein:
the general circuit of the modular refrigerating installation is controlled by a master controller (25), and the circuit of each modular unit is controlled by a microprocessor controller (18).
